# FASCICULE DE BREVET EUROPEEN

(11) **EP 1 987 653 B1**
(45) Date de publication et mention de la délivrance du brevet: **04.12.2019**
(21) Numéro de dépôt: 07731619.8
(22) Date de dépôt: 13.02.2007
(51) Int. Cl.: H04L 29/06, G06F 9/4401

(54) **PROCEDE ET DISPOSITIF DE CONFIGURATION SECURISEE D'UN TERMINAL**
VERFAHREN UND VORRICHTUNG ZUR SICHEREN KONFIGURATION EINES ENDGERÄTS
METHOD AND DEVICE FOR SECURELY CONFIGURING A TERMINAL

(30) Priorité: 21.02.2006 FR 0601536
(43) Date de publication de la demande: 05.11.2008
(73) Titulaire: Orange, 75015 Paris (FR)
(72) Inventeur: CHARLES, Olivier, F-92140 Clamart (FR); TINNES, Julien, F-75013 Paris (FR); LECLERCQ, Eric, B-1000 Bruxelles (BE)
(86) Numéro de dépôt international: PCT/FR2007/050794
(87) Numéro de publication internationale: WO 2007/096554

(56) Documents cités:
- WO-A-2005/036822
- WO-A2-2005/043468
- US-A- 5 249 218
- US-A- 5 892 902
- US-A1- 2004 139 252
- US-A1- 2006 015 931
- US-A1- 2006 026 338
- MICROSOFT TEC: "Windows XP Professional Resource Kit - Managing devices", INTERNET CITATION, 3 November 2005 (2005-11-03), XP007902486, Retrieved from the Internet: URL:http://www.microsoft.com/germany/techn et/prodtechnol/winxppro/reskit/c09621675.m spx [retrieved on 2007-06-12]

## Description

L'invention concerne le domaine des télécommunications et de l'informatique; Elle concerne plus précisément un procédé et dispositif de configuration d'un terminal.

L'invention trouve des applications pertinentes dans toutes les situations de nomadisme, c'est-à-dire des situations dans lesquelles des utilisateurs d'un terminal informatique utilisent à distance les ressources d'un système informatique ou d'un réseau informatique. Usuellement les utilisateurs nomades utilisent un ordinateur personnel portable qui leur est propre et le connectent au réseau de leur entreprise via le réseau Internet ou le réseau d'un opérateur de télécommunication.

La sécurité informatique est un problème pour lors de ces connexions distantes, du fait notamment de la présence de risques tels que virus sur le PC, écoute de la communication, intrusion sur le réseau de l'entreprise. Il est donc impératif que les logiciels utilisés soient fiables, et donc exempts de virus, programmes espions, chevaux de Troie, etc, et que la connexion entre l'ordinateur et le réseau de l'entreprise soit sécurisée, par exemple par l'utilisation d'un réseau privé virtuel. C'est la raison pour laquelle les entreprises imposent que la connexion soit établie à partir d'un terminal qu'elles auront fourni à l'employé et proscrivent des connexions à partir de machines dont le contenu n'est pas maîtrisé. Une conséquence de cette situation est que les utilisateurs nomades doivent systématiquement transporter avec eux leur ordinateur portable et n'ont pas la possibilité d'utiliser un autre ordinateur personnel, celui de la maison ou d'un ami par exemple.

Il est donc important de disposer d'une solution technique pour configurer et connecter un ordinateur personnel à un réseau d'entreprise qui garantisse que les logiciels qui seront utilisés ultérieurement sont parfaitement fiables, quel que soit l'ordinateur personnel ou le terminal utilisé pour la mise en œuvre de la connexion.

Les solutions techniques les plus abouties dans ce domaine sont les supports d'enregistrement de type CD-ROM comprenant un système d'exploitation qui sera amorcé avec lors du démarrage de l'ordinateur. Le gros défaut de ce système est de ne pas fournir de moyen de stockage des données de l'utilisateur.

On commence également à voir apparaître des mémoires amovibles pouvant être connectées au port USB (Universal Serial Bus) d'un ordinateur personnel et dans lesquelles est stocké un système d'exploitation complet dans un format tel que, au redémarrage de l'ordinateur, c'est ce système d'exploitation qui sera lancé. Par conséquent les logiciels initialement installés sur le disque dur de l'ordinateur ne seront pas sollicités, seuls le seront les logiciels embarqués sur la mémoire amovible. De cette façon, le niveau de sécurité offert dépend uniquement de l'ensemble de logiciels sur la mémoire et non pas de l'ordinateur personnel utilisé.

Le document US 5 249 218 décrit un système comprenant un ordinateur portable avec une unité de traitement centrale et un logiciel associé, et un modem avec une prise de sortie pour la transmission des données afin de faciliter le contrôle d'un grand nombre de variété de dispositifs d'accès téléphonique.

Le document US 5 892 902 décrit un système sécurisé incluant un ordinateur hôte, un jeton intelligent en communication entre un ordinateur hôte et un ordinateur distant, en communication avec l'ordinateur hôte.

Cependant il n'est pas simple pour un utilisateur de configurer le système d'exploitation de l'ordinateur personnel pour avoir accès au réseau. Il faut déjà qu'il dispose du pilote pour faire fonctionner le périphérique d'accès au réseau de l'ordinateur personnel et qu'il sache configurer le logiciel d'accès au réseau avec les paramètres de connexion. Il n'est donc pas possible d'automatiser cette phase car tous ces éléments dépendent physiquement de la machine à configurer et de la manière dont elle est connectée au réseau.

L'invention a pour but de fournir un dispositif et un procédé de configuration automatique d'un terminal, en vue de l'accès à un réseau de télécommunication prédéfini, à partir de données d'un environnement informatique stockées sur une mémoire.

Dans ce but, l'invention a pour objet, selon un premier aspect, un procédé de configuration d'un terminal selon la revendication 1.

Grâce à ce procédé, le terminal est automatiquement configuré pour utiliser un module d'accès à un réseau de télécommunication, ce module étant celui d'un dispositif de télécommunication, par exemple un téléphone mobile. Ce module est indépendant du terminal utilisé. Il est de préférence propre à un utilisateur donné. En outre, ses caractéristiques étant connues, il est possible de configurer le terminal pour accéder au réseau de télécommunication à condition de disposer du pilote convenant à ce dispositif. De préférence, la liaison de communication entre le terminal et le dispositif sera établie par liaison USB ou par liaison non filaire.

Selon un exemple, le procédé comprend en outre:
- une étape d'établissement d'une liaison de communication entre ledit terminal et ledit réseau de communication, au moyen dudit module d'accès et de paramètres de connexion stockés dans ladite mémoire.

De la sorte, le terminal peut aisément être configuré pour accéder à un réseau de télécommunication avec des paramètres de connexion qui sont propres à l'utilisateur. Le programme de connexion est préconfiguré pour fonctionner avec le pilote fourni et le module d'accès réseau.

Selon un mode de réalisation, le procédé comprend en outre:
- une étape de démarrage d'un pilote d'un dispositif de lecture de carte à puce apte à interroger une carte à puce, le pilote étant stocké dans ladite mémoire et étant apte à piloter le dispositif de lecture à travers une liaison de communication entre ledit terminal et le dispositif de lecture.

La présence d'un dispositif de lecture de carte à puce permet d'apporter des fonctions robustes de chiffrement au niveau du terminal.

Selon un mode de réalisation, le procédé comprend en outre:
- une étape d'établissement d'un tunnel de communication sécurisé entre ledit terminal et un serveur dudit réseau de télécommunication, étape lors de laquelle une procédure d'authentification forte est mise en œuvre au moyen d'une carte à puce interrogeable via ledit pilote du dispositif de lecture de carte à puce.

Une connexion fiable et sûre peut ainsi être mise en œuvre lors de la connexion du terminal au réseau de communication, la procédure d'authentification ne pouvant aboutir que si un code PIN (personal identification number) est fourni à la carte à puce.

Selon un mode de réalisation, le procédé comprend en outre:
- une étape de construction d'au moins une partition virtuelle à partir de données chiffrées stockées dans ladite mémoire en vue de rendre accessible par un utilisateur dudit terminal lesdites données chiffrées.

Des données d'un utilisateur peuvent ainsi être stockées de manière sûre dans la mémoire et néanmoins rendues aisément accessibles par un utilisateur du terminal.

Selon un mode de réalisation, le procédé comprend en outre:
- une étape d'envoi à une carte à puce, interrogeable via le pilote du dispositif de lecture de lecture de carte à puce, d'une requête de déchiffrement d'au moins une clef chiffrée de déchiffrement,
- une étape de déchiffrement d'au moins une partie des données chiffrées stockées dans ladite mémoire au moyen d'au moins une clef de déchiffrement déchiffrée.

Ainsi l'accès aux données de l'utilisateur est sécurisé du fait de l'intervention de la carte à puce dans le processus d'accès aux données. En effet, le déchiffrement de la clef chiffrée ou des clefs chiffrées par la carte à puce n'est effectué que conditionnellement à la fourniture à la carte à puce d'un code PIN.

Corrélativement, l'invention a pour objet un dispositif de configuration d'un terminal selon la revendication 6.

Selon un mode de réalisation, le dispositif selon l'invention comprend en outre
- une carte à puce,
- un dispositif de lecture apte à lire et/ou interroger la carte à puce, ladite mémoire comprenant en outre,
- un pilote du dispositif de lecture apte à piloter le dispositif de lecture à partir dudit terminal à travers une liaison de communication entre ledit terminal et le dispositif de lecture,
   le système d'exploitation étant apte à démarrer le pilote du dispositif de lecture. Selon un mode de réalisation, le dispositif comprend en outre des moyens de stockage de données comprenant,
- des données chiffrées,
- au moins une clef chiffrée de déchiffrement,
   ladite mémoire comprenant en outre,
- un pilote de gestion d'accès à des données apte à construire au moins une partition virtuelle à partir de données chiffrées stockées dans lesdits moyens de stockage de données, afin de rendre accessible par un utilisateur dudit terminal lesdites données chiffrées, le pilote de gestion d'accès à des données étant apte à envoyer à la carte à puce via le pilote du dispositif de lecture une requête de déchiffrement d'au moins une clef chiffrée de déchiffrement et apte à déclencher le déchiffrement d'au moins une partie des données chiffrées au moyen d'au moins une clef de déchiffrement déchiffrée,
le système d'exploitation étant apte à déclencher l'exécution du pilote de déchiffrement.

Les avantages énoncés pour le procédé selon l'invention sont transposables au dispositif selon l'invention et à ses différents modes de réalisation.

Selon un mode de réalisation, ladite mémoire, ledit module d'accès et ladite carte à puce sont intégrés dans un terminal de télécommunication mobile.

Dans ce mode de réalisation, le dispositif permettant de configurer le terminal est aisément portable. En outre, il est fiable et permet à un utilisateur de transporter facilement ses données personnelles.

D'autres buts, caractéristiques et avantages de l'invention apparaîtront à travers la description qui va suivre, donnée uniquement à titre d'exemple non limitatif, et faite par référence aux dessins annexés sur lesquels:
- la figure 1a est une illustration d'un exemple;
- la figure 1b est une illustration d'un mode de réalisation du dispositif selon l'invention;
- la figure 2 représente un organigramme d'un mode de réalisation du procédé selon l'invention.

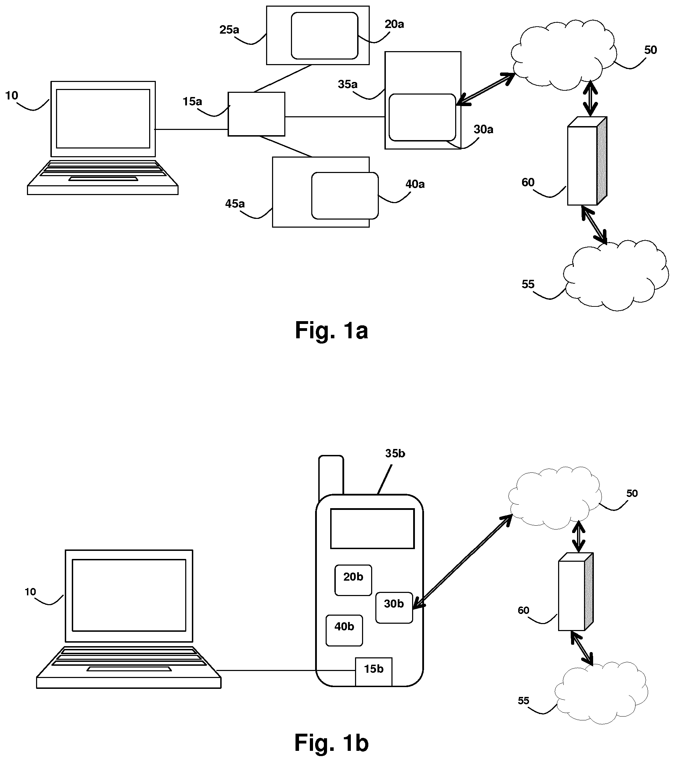

La figure 1a illustre un exemple.

Le dispositif représenté à la figure 1a comprend:
- un terminal 10;
- un répéteur 15a multiport (plus communément appelé "hub" dans la terminologie anglo-saxonne);
- un support d'enregistrement 25a de données comprenant une mémoire 20a;
- un dispositif de lecture de carte à puce 45a, permettant de lire, d'accéder à ou d'interroger une carte à puce 40a;
- un dispositif de télécommunication 35a comprenant un module d'accès réseau 30a pour l'accès à un réseau 50 de télécommunication.

Le réseau 50 de télécommunication est par exemple un réseau Ethernet, un réseau cellulaire GSM/GPRS, un réseau cellulaire UMTS, un réseau WIFI, le réseau téléphonique commuté (RTC), etc.

L'invention vise à fournir un dispositif et un procédé de configuration automatique du terminal 10, en vue de l'accès au réseau 50 de télécommunication, et notamment en vue de l'accès à un serveur prédéfini ou passerelle 60. Ce serveur 60 est par exemple une passerelle contrôlant l'accès à un deuxième réseau de télécommunication, ce deuxième réseau de télécommunication étant par exemple un réseau d'entreprise (Intranet). L'invention permet à un utilisateur nomade d'accéder à un réseau 50 de télécommunication prédéfini en utilisant le terminal 10, même si ce terminal 10 ne dispose pas de moyens d'accès au réseau de télécommunication 50.

Le terminal 10 est typiquement un ordinateur personnel, disposant au moins d'une unité centrale de traitement de données, un clavier, un écran, et d'un bus de communication pour l'interconnexion de périphériques à l'unité centrale, par exemple d'un bus série répondant à la norme USB (Universal Serial Bus). Il n'est pas indispensable que le terminal dispose d'un disque dur, dans la mesure où, celui-ci n'est pas utilisé pour la mise en œuvre de l'invention. Le terminal 10 comprend en outre au moins un port USB pour le raccordement d'un périphérique externe.

Le terminal 10 comprend en outre une mémoire dans laquelle est stocké le BIOS (Basic Input/Output System) ou système de base d'entrée/sortie, programme bas niveau permettant la détection, lors du démarrage du terminal 10, des périphériques connectés au terminal 10, ainsi que le démarrage du système d'exploitation.

Le support d'enregistrement 25a est réalisé par exemple sous la forme d'une clef USB, d'un CD-ROM, d'un disque dur amovible, etc. Ce support d'enregistrement est de préférence un support aisément transportable par un utilisateur nomade.

Le dispositif 35a de télécommunication est par exemple un terminal mobile de télécommunication, le module d'accès réseau étant dans ce cas avantageusement constitué par le modem d'accès au réseau de télécommunication. Le terminal de télécommunication est par exemple un téléphone mobile ou un assistant personnel (PDA, Personal Data Assistant).

Le module d'accès réseau 30a permet l'accès au réseau 50 de télécommunication considéré et est donc compatible avec les normes de communication de ce réseau.

Dans l'exemple décrit, les trois périphériques 25a, 35a, 45a sont des périphériques disposant d'un port série conforme à la norme USB et raccordables par un câble pour bus USB à un port USB du terminal 10.

Le répéteur 15a permet de raccorder les trois périphériques 25a, 35a, 45a sur un même port USB du terminal 10. Il a pour rôle notamment de multiplexer les données issues des différents périphériques pour l'accès au bus USB. La présence d'un tel répéteur n'est toutefois pas nécessaire si le terminal 10 dispose de suffisamment de ports USB. Dans ce cas, les trois périphériques peuvent être raccordés directement au terminal 10, c'est-à-dire sans l'intermédiaire du répéteur.

En variante, d'autres types de bus de communication ou d'autres types de liaison de communication peuvent être utilisés pour réaliser la liaison de communication entre le terminal 10 et les trois périphériques. Toutefois, en ce qui concerne le support d'enregistrement, ce support doit être détecté et reconnu par le BIOS du terminal 10 comme un périphérique de stockage de données susceptible de comprendre les données d'exécution d'un système d'exploitation du terminal 10.

La figure 1b illustre un mode de réalisation de l'invention. Dans ce mode de réalisation, le répéteur 15b, la mémoire 20b, le module d'accès 30b, la carte à puce 40b font partie d'un même terminal 35b de télécommunication mobile. Ce terminal 35b comprend des moyens de lecture de carte à puce et ce sens constitue un dispositif de lecture de carte à puce apte à lire et/ou interroger une carte à puce. Il dispose également d'un port USB permettant d'établir une liaison de communication avec le terminal 10. Ce terminal est réalisé par exemple sous la forme d'un téléphone mobile ou d'un assistant personnel (PDA, Personnal Data Assistant).

Ce mode de réalisation a l'avantage d'être d'encombrement très réduit et facilement transportable par un utilisateur nomade.

En branchant le téléphone mobile au terminal 10 par l'intermédiaire d'un câble USB, trois périphériques sont alors accessibles par le terminal 10 via le même port USB:
- une mémoire ou zone mémoire, vue comme une clé USB classique,
- un module d'accès au réseau, qui est en fait le modem d'accès au réseau du téléphone mobile,
- une carte à puce, qui est en fait la carte SIM (Suscriber Identity Module) du module d'accès au réseau.

Dans ce mode de réalisation, le téléphone est vu par le terminal 10 soit comme une carte réseau, soit comme un modem.

La suite de la description se réfère à ce mode de réalisation.

Pour la mise en œuvre de l'invention, les données suivantes sont stockées dans la mémoire 20a, 20b:
- un secteur de démarrage avec un programme de démarrage d'un système d'exploitation du terminal 10;
- des données d'exécution de ce système d'exploitation;
- des données d'exécution de programmes applicatifs, compatibles avec ce système d'exploitation;
- une ou plusieurs partitions avec des données chiffrées (programmes, fichiers, paramètres...) d'un utilisateur du terminal 10;
- une ou plusieurs clefs de déchiffrement, respectivement de chiffrement, des données de l'utilisateur.

Chaque clef de déchiffrement, respectivement de chiffrement, est associée en vue du chiffrement, respectivement du déchiffrement, à une partition ou à un bloc de données d'une partition. Dans un mode de réalisation simplifié, c'est la partition entière qui est chiffrée. Dans la suite de la description, les clefs de chiffrement sont notées KCᵢ, et les clefs de déchiffrement KDᵢ, avec 0≤i<N, où N est le nombre de clefs de chiffrement, respectivement de déchiffrement. Dans le cas où une méthode symétrique de chiffrement est utilisée, les clefs KCᵢ et KDᵢ sont identiques.

Les clefs de chiffrement et de déchiffrement KCᵢ et KDᵢ sont chiffrées avant d'être stockées dans la mémoire 20a, 20b. Les clefs chiffrées sont notées KCCᵢ et KCDᵢ respectivement.

Les données d'exécution du système d'exploitation comprennent elles-mêmes:
- au moins un fichier comprenant le programme du système d'exploitation lui-même (image du système d'exploitation, appelé aussi noyau);
- des pilotes de périphériques, dont un pilote du lecteur de la carte à puce 40a, 40b, un pilote du module d'accès 30a, 30b ainsi qu'un pilote de gestion d'accès à des données, gérant l'accès à des données chiffrées de la mémoire 20a, 20b et mettant en œuvre des fonctions de chiffrement et déchiffrement;
- les paramètres d'exécution du système d'exploitation ainsi que les paramètres associés aux pilotes.

Les données d'exécution de programmes applicatifs comprennent elles-mêmes :
- des programmes applicatifs, dont un programme de connexion à un réseau de télécommunication accessible via le module d'accès 30a, 30b;
- des paramètres d'exécution de ces programmes applicatifs, notamment des paramètres de connexion à utiliser lors de l'établissement d'une connexion au réseau par le programme de connexion.

Le pilote de gestion d'accès à des données est conçu pour envoyer à la carte à puce via le pilote du dispositif de lecture une requête de déchiffrement d'une ou de plusieurs clefs de déchiffrement KCDᵢ et pour déchiffrer tout ou partie des blocs chiffrés au moyen des clefs de déchiffrement déchiffrées KDᵢ.

Les paramètres de connexion sont dépendants du réseau de télécommunication utilisé. Ces paramètres comprennent par exemple:
- pour une connexion à un réseau GPRS (General Packet Radio Service) : APN (Access Point Name), type de protocole d'authentification, une adresse IP (Internet Protocol), ...
- pour une connexion à un réseau WiFi : nom du SSID (service set identifier) (par ex : Orange); mode d'authentification, mode de chiffrement, clé de chiffrement, etc
- pour une connexion à un réseau téléphonique via un modem ADSL : protocole point à point utilisé (PPPoA ou PPPoE), nom et mot de passe de client du fournisseur d'accès à Internet,...

La carte à puce dispose de fonctions de chiffrement et déchiffrement. Elle contient en outre un premier certificat numérique pour l'authentification lors de la mise en œuvre d'une liaison sécurisée et un deuxième certificat numérique pour le chiffrement de données.

En ce qui concerne le chiffrement de données, il est fait usage par exemple de fonctions de cryptographie asymétrique. Dans ce cas, la carte à puce contient un certificat numérique, une clef publique K_{pub}, utilisée pour le chiffrement des données, et une clef privée Kₚᵣᵢ utilisée pour déchiffrer ce qui a été chiffré au moyen de la clef publique. La clef publique K_{pub} peut être transmise à un programme s'exécutant en dehors de la carte à puce en vue du chiffrement, tandis que l'usage de la clef privée Kₚᵣᵢ est réservé à l'environnement sécurisé de la carte à puce et aux programmes de déchiffrement mis en œuvre dans la carte à puce.

Les clefs de chiffrement et de déchiffrement KCᵢ et KDᵢ des données des partitions de l'utilisateur sont elles-mêmes chiffrées au moyen de la clef publique K_{pub} du certificat numérique de chiffrement avant d'être stockées dans la mémoire 20a, 20b. La carte à puce est utilisée dans le contexte de l'invention pour déchiffrer les clefs chiffrées KCCᵢ et KCDᵢ au moyen de la clef privée Kₚᵣᵢ du certificat numérique de chiffrement.

Une règle définit quelle clef de chiffrement, respectivement de déchiffrement, doit être utilisée pour une partition ou un bloc de données. Par exemple, si on utilise N clefs de chiffrement (et donc N clefs de déchiffrement), et qu'on est en présence de Z blocs de mémoire à chiffrer, la règle définit qu'un bloc x, 0≤x<Z, sera chiffré, respectivement déchiffré, au moyen de la clef KCᵢ de chiffrement, respectivement KDᵢ de déchiffrement, telle que x est congru à i modulo N.

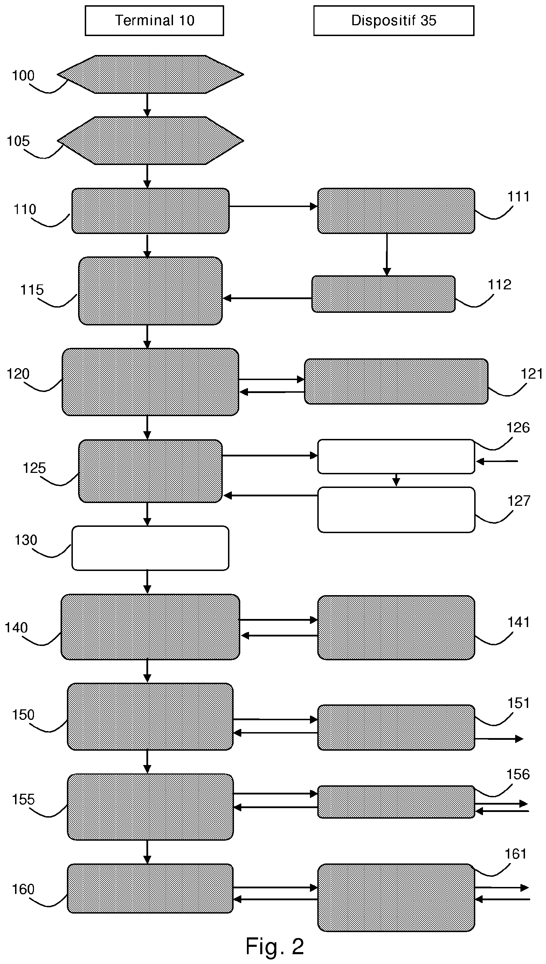

Le procédé selon l'invention est maintenant décrit plus en détail par référence à la figure 2.

A l'étape 100, la connexion est réalisée entre d'une part le terminal 10 et d'autre part un dispositif, désigné sous la référence générale 35. Le dispositif 35 comprend dans le mode de réalisation de la figure 1a, les périphériques 25a, 35a, 45a, et, dans le mode de réalisation de la figure 1b, le dispositif 35b.

A l'étape 105, le terminal est mis sous tension et démarré.

A l'étape 110 le programme BIOS du terminal est démarré. Ce programme BIOS exécute une procédure de détection des périphériques présents sur le terminal ou interconnectés à ce terminal. Il recherche, selon un ordre prédéfini dans une liste configurable qui lui est propre, parmi les supports d'enregistrement de données, le premier support comprenant un secteur d'amorçage comprenant des données d'amorçage du système d'exploitation. Traditionnellement, la configuration standard des listes de démarrage indique que les appareils connectés au bus USB doivent être interrogés avant le disque dur du terminal. Par conséquent, dans l'invention, c'est le secteur d'amorçage de la mémoire de la clé USB qui est utilisé.

A l'étape 111, la mémoire répond à la détection de présence. Le programme du BIOS détecte donc la présence d'une mémoire 20a, 20b de stockage sur le périphérique USB 25a ou 35b. A l'étape 112, le programme du BIOS accède en lecture à la mémoire.

A l'étape 115, le programme BIOS déclenche l'exécution du programme de démarrage trouvé dans la mémoire. Ce programme de démarrage déclenche lui l'exécution du système d'exploitation stocké dans la mémoire 20a, 20b.

A l'étape 120, le système d'exploitation détecte la présence d'un lecteur de carte à puce et lance le pilote correspondant à ce lecteur de carte à puce, pilote qui est également stocké dans la mémoire 20a, 20b. A l'étape 121, le lecteur de carte à puce est démarré suite au lancement de son pilote.

A l'étape 125, le système d'exploitation lance le pilote de gestion d'accès à des données, pilote qui est également stocké dans la mémoire 20a, 20b. Ce pilote envoie une requête au pilote du lecteur de la carte à puce pour demander à la carte à puce de déchiffrer des clefs de déchiffrement KCDᵢ. A l'étape 126, le lecteur de la carte à puce demande à l'utilisateur de saisir son code d'identification. En cas de saisie erronée, après trois essais erronés, l'accès à la carte à puce est refusé et le procédé s'interrompt. Dans le cas contraire, la carte à puce est déverrouillée et déchiffre la ou les clefs de déchiffrement KCDᵢ, puis renvoie des clefs déchiffrées KDᵢ au pilote de de gestion d'accès à des données.

A l'étape 130 le pilote de gestion d'accès à des données monte, c'est-à-dire construit, à partir d'une partie (une partition, un fichier, un bloc) de la mémoire 20a, 20b (support de masse physique) comprenant des données chiffrées de l'utilisateur, une partition virtuelle de manière à rendre accessible par un utilisateur du terminal les données chiffrées stockées dans cette partie. La partie de la mémoire est ainsi rendue accessible par l'utilisateur via un périphérique virtuel de stockage contenant un système de fichiers crypté. L'organisation logique des fichiers stockés dans la partie de la mémoire est vue par l'utilisateur comme une arborescence de répertoires et de fichiers, arborescence identique ou semblable à celles utilisées usuellement pour une partition de disque dur, le pilote de gestion d'accès aux données construisant cette arborescence afin de rendre accessible par un utilisateur du terminal les données stockées dans la partie concernée de la mémoire 20a, 20b.

Suite à une demande d'accès en lecture (respectivement en écriture) à un fichier de données de cette arborescence, le pilote de gestion d'accès aux données déchiffre (respectivement chiffre) à la volée le ou les blocs de données comprenant ce fichier en utilisant les clefs déchiffrées KDᵢ, l'ensemble des données à déchiffrer étant projetées en mémoire par la technique dite de mappage avant déchiffrement et conservées en mémoire de projection sous forme déchiffrée, afin de pouvoir être utilisées ou modifiées par l'utilisateur du terminal. De cette manière un support de masse virtuel ou logique, image d'une partie du support de masse physique, est rendu accessible par l'utilisateur grâce au pilote de de gestion d'accès aux données.

Avantageusement, aucun processus de permutation de mémoire (ou swap, en terminologie anglo-saxonne) ne sera utilisé. L'absence de permutation garantit que le fichier déchiffré ne sera jamais présent sur un quelconque disque, ni même sur un autre support, ce qui renforce la sécurité du dispositif.

De cette manière, l'utilisateur du terminal dispose à partir de la mémoire USB d'un système de fichiers classique, le pilote se chargeant de chiffrer et de déchiffrer les blocs de la mémoire USB lors de l'utilisation.

A l'étape 140, le système d'exploitation détecte la présence d'un module 30a, 30b d'accès réseau et lance le pilote correspondant à ce module d'accès réseau, pilote qui est également stocké dans la mémoire 20a, 20b. A l'étape 141 le module 30a, 30b d'accès réseau est démarré.

A l'étape 150, le système d'exploitation déclenche l'exécution du programme de connexion au réseau 50 de télécommunication stocké dans la mémoire 20a, 20b. Ce programme envoie au module d'accès au réseau des commandes en vue de l'établissement de la connexion. De préférence, ce programme de connexion est préconfiguré avec des paramètres de connexion propres à l'utilisateur, qui sont stockés dans la mémoire 20a, 20b. De cette manière, l'utilisateur n'a aucune configuration manuelle à effectuer pour obtenir l'établissement de cette connexion.

En alternative, c'est l'utilisateur qui déclenche manuellement l'exécution du programme de connexion au réseau.

A l'étape 151, suite au déclenchement de ce programme, la connexion au réseau est établie par le module 30a, 30b d'accès au réseau 50. A ce stade, l'utilisateur peut accéder à des services sur le réseau (web, messagerie, etc...).

A l'étape 155, le programme de connexion au réseau déclenche une procédure de mise en place d'une liaison sécurisée ou tunnel sécurisé entre le terminal 10 et le serveur 60 interconnecté au réseau 50.

La procédure d'établissement de la liaison sécurisée est soit déclenchée automatiquement par le programme de connexion soit à la demande de l'utilisateur du terminal 10.

A l'étape 156, suite à l'étape 55 et suite à une demande d'authentification reçue du serveur 60 par le terminal 10 lors de la procédure d'établissement de la liaison sécurisée, le lecteur de carte à puce ou le dispositif 35b demande à l'utilisateur de saisir son code d'identification, pour déverrouiller l'accès au certificat d'authentification forte stocké dans la carte à puce afin de réaliser une opération d'authentification forte. Optionnellement, ce code d'identification peut être différent du code utilisé à l'étape 126.

A l'étape 160, en cas d'authentification réussie, la procédure d'établissement de la liaison sécurisée se poursuit. L'établissement de la liaison sécurisée fait appel à des techniques d'établissement de réseau privé virtuel usuelles, mettant en œuvre notamment un protocole sécurisé (IKE et IPSec par exemple). A l'étape 161, suite à l'établissement de la connexion, l'utilisateur est en mesure d'accéder au serveur 60. Dans le cas où ce serveur sert de passerelle d'accès à un réseau d'entreprise, l'utilisateur sera en mesure d'accéder à ce réseau d'entreprise.

Optionnellement, l'utilisateur peut mettre à jour son environnement logiciel en téléchargeant, à partir de ce serveur ou d'un autre serveur, des correctifs ou de nouveaux programmes et les insérer sur son module mémoire.

Pour restaurer la configuration initiale du terminal 10, il suffit que l'utilisateur arrête le terminal 10 et déconnecte le dispositif 35b (mode de réalisation de la figure 1b): au prochain démarrage du terminal 10, celui-ci sera à nouveau dans sa configuration initiale.

Grâce aux logiciels embarqués dans le module mémoire, il est possible, sans configuration manuelle de l'utilisateur, d'accéder à des données chiffrées stockées sur un support de stockage de données, de faire fonctionner un module d'accès réseau et d'accéder au réseau 50 à partir du terminal 10, et ce quel que soit le terminal 10 hôte sur lequel est branché le dispositif 35b.

D'un point de vue technique, le dispositif présente un très haut niveau de sécurité de par l'utilisation couplée d'une mémoire, d'une carte d'accès réseau et d'une carte à puce.

L'usage d'une carte à puce permet d'utiliser lors du chiffrement des clefs beaucoup plus longues qu'un simple mot de passe et donc améliore le niveau de sécurité du dispositif. En outre, la carte à puce améliore beaucoup l'ergonomie du dispositif en limitant la saisie par l'utilisateur à un code d'identification court (en général 4 chiffres), avant autorisation d'accès aux données privées de la carte. Enfin, une carte à puce se bloque au bout de trois essais infructueux de saisie de code, ce qui permet d'empêcher les attaques par essais exhaustifs.

L'accès aux données chiffrées ainsi que la mise en place d'un tunnel de communication sécurisé sont conditionnés par la fourniture d'un code personnel d'identification (PIN).

Le disque dur du terminal 10 n'est jamais sollicité. En outre l'utilisateur n'y laisse pas de données personnelles. De plus, l'utilisateur ne peut pas exécuter les programmes résidents sur le disque dur de la machine, notamment des virus ou des programmes malveillants. De manière générale, seuls les programmes présents dans la mémoire pourront être exécutés.

Si la procédure de mise à jour distante des logiciels dans le module mémoire est intègre, le logiciel complet reste intègre dans le temps. Il n'y a pas de risque de détérioration du niveau de sécurité. De préférence, le programme de gestion de la mise à jour comprend une fonction de vérification de signature des logiciels téléchargés pour empêcher le téléchargement de programmes non certifiés.

Grâce à l'invention, le programme de connexion est préconfiguré pour fonctionner avec un module d'accès au réseau prédéfini et dans le contexte prédéfini par l'opérateur de télécommunication fournissant l'accès au réseau, et notamment avec des paramètres de connexion propres à un utilisateur.

Quand le système d'exploitation est démarré, c'est-à-dire lorsque le terminal 10 est démarré, le système d'exploitation utilise les ressources du module d'accès réseau pour permettre l'accès au réseau par les programmes de l'utilisateur.

Les connexions passent par un réseau maîtrisé par l'utilisateur lui-même (réseau d'entreprise ou réseau domestique) ou par son opérateur (réseau mobile ou WiFi).

En complément, il est techniquement facile, par exemple en ne fournissant pas les pilotes de gestion de ces interfaces de faire en sorte que le système d'exploitation démarré à partir du module mémoire ne puisse pas utiliser d'autres interfaces réseaux que celle du dispositif. Cela évite la connexion à des réseaux non sûrs.

En ce qui concerne l'accès au modem du dispositif 35a, 35b ou l'accès à la carte à puce du dispositif 35b, une liaison sans fil peut être utilisée en alternative à une liaison filaire par bus USB entre le terminal et le dispositif 35a, 35b, par exemple une liaison WiFi ou Bluetooth.

En ce qui concerne l'utilisation de la carte SIM du module d'accès réseau comme carte (mode de réalisation de la figure 1b), on utilise de préférence pour le terminal 10 un pilote virtuel tel que celui décrit dans le document de brevet publié sous le numéro WO2005/036822. Un tel pilote est susceptible d'être utilisé aussi bien avec une liaison filaire ou non filaire entre le terminal et le dispositif 35a, 35b. De la sorte, le terminal pourra accéder à la carte SIM comme s'il s'agissait d'une carte à puce insérée dans un lecteur local de carte à puce, et donc en faisant abstraction du lien USB et des contraintes d'accès liées à l'intégration de la carte SIM dans l'environnement du terminal mobile.

Un pilote virtuel est utilisable également pour le pilotage du module d'accès réseau, de manière à ce que les programmes d'accès au réseau fonctionnent de la même manière que si le module d'accès au réseau était un module installé localement dans le terminal 10.

En alternative à l'utilisation d'une clef USB, notamment dans le cas d'un ordinateur personnel 10 relativement ancien qui ne peut pas démarrer sur le port USB, il est possible d'utiliser un CD-ROM pour la première phase de configuration et de démarrage du système d'exploitation, puis, une fois le système d'exploitation démarré et les périphériques USB accessibles, de rechercher les données utilisateur sur la zone de stockage sur USB ou sur une zone de stockage accessible via un autre type de liaison de communication, par exemple une zone mémoire du terminal mobile 35b qui serait accessible via une liaison Bluetooth établie entre le terminal 10 et le terminal mobile 35b.

De manière générale, pour augmenter la capacité de stockage, deux supports d'enregistrement peuvent être utilisés: l'un pour l'installation du système d'exploitation et des pilotes, l'autre pour les données de l'utilisateur. Dans ce cas, le premier des deux supports est accessible par le BIOS et détecté comme faisant partie de la liste des supports que le BIOS analyse pour y détecter la présence d'un programme de démarrage. Le deuxième des deux supports est accessible à partir du terminal 10 au moyen d'un pilote de gestion de périphérique de stockage via une liaison de communication entre le terminal 10 et ce support d'enregistrement.

Dans un mode de réalisation où on privilégiera le volume de stockage des données à la rapidité d'exécution, on pourra remplacer la mémoire USB, par un mini disque dur.

Le processus de configuration du terminal 10 selon l'invention est entièrement automatisé. Les seuls moments où l'utilisateur intervient sont lors de la saisie de codes personnels d'identification, ou optionnellement, pour le lancement du programme de connexion ou du programme d'établissement de la liaison sécurisée. Grâce à l'invention, il devient donc extrêmement simple pour un utilisateur nomade de configurer un ordinateur personnel quelconque en vue de l'accès à un réseau, ou plus simplement, afin de travailler dans un environnement logiciel prédéfini et avec des données qui lui sont propres. L'intégrité de l'environnement logiciel et des données de l'utilisateur est garantie.

## Revendications

1. Procédé de configuration d'un terminal comprenant une étape d'initialisation dudit terminal déclenchant automatiquement au moins:
- une étape (110) de détection de présence d'une mémoire (20b) par un système de base d'entrée/sortie du terminal,
- une étape (112) d'accès par le système de base d'entrée/sortie à ladite mémoire,
- une étape (115) de démarrage d'un système d'exploitation dudit terminal stocké dans ladite mémoire,
**caractérisé en ce que** préalablement à l'étape de détection de présence, le procédé comprend une étape (100) de liaison de communication d'un terminal de télécommunication mobile (35b) avec ledit terminal,
et **en ce que** il comprend en outre le déclenchement automatique d'une étape (140) de démarrage d'un pilote d'un module (30b) d'accès à un réseau de télécommunication, le pilote du module d'accès étant stocké dans ladite mémoire et apte à piloter le module d'accès à partir dudit terminal à travers ladite liaison de communication entre ledit terminal et le terminal de télécommunication mobile (35b), ledit terminal de télécommunication mobile comprenant ladite mémoire et ledit module d'accès.

2. Procédé de configuration selon la revendication 1, comprenant,
- une étape (120) de démarrage d'un pilote d'un dispositif de lecture de carte à puce apte à interroger une carte à puce (40b), le pilote étant stocké dans ladite mémoire et étant apte à piloter le dispositif de lecture à travers une liaison de communication entre ledit terminal et le dispositif de lecture.

3. Procédé de configuration selon la revendication 2, comprenant,
- une étape (155) d'établissement d'un tunnel de communication sécurisé entre ledit terminal et un serveur dudit réseau de télécommunication, étape lors de laquelle une procédure d'authentification forte est mise en œuvre au moyen d'une carte à puce interrogeable via ledit pilote du dispositif de lecture de carte à puce.

4. Procédé de configuration selon la revendication 2 ou 3, comprenant,
- une étape de construction (130) d'au moins une partition virtuelle à partir de données chiffrées stockées dans ladite mémoire en vue de rendre accessible par un utilisateur dudit terminal lesdites données chiffrées.

5. Procédé de configuration selon la revendication 2 ou 3, comprenant,
- une étape (125) d'envoi à une carte à puce, interrogeable via le pilote du dispositif de lecture de lecture de carte à puce, d'une requête de déchiffrement d'au moins une clef chiffrée de déchiffrement,
- une étape (130) de déchiffrement d'au moins une partie des données chiffrées stockées dans des moyens de stockage de données au moyen d'au moins une clef de déchiffrement déchiffrée.

6. Dispositif de configuration d'un terminal, le dispositif comprenant au moins, une mémoire (20b),
la mémoire étant accessible par un système de base d'entrée/sortie dudit terminal lors d'une phase de démarrage dudit terminal, ladite mémoire comprenant un système d'exploitation du terminal,
ladite mémoire étant apte à soutenir, pendant le démarrage du terminal, au moins
- la détection par le système de base d'entrée/sortie du terminal de la présence de ladite mémoire,
- l'accès par le système de base d'entrée/sortie à ladite mémoire,
- le démarrage du système d'exploitation stocké dans ladite mémoire, **caractérisé en ce que** le dispositif de configuration est un terminal de télécommunication mobile comprenant un module d'accès à un réseau de télécommunication, **en ce que** le terminal de télécommunication mobile comprend des moyens d'établissement d'une liaison de communication du terminal de télécommunication mobile (35b) avec ledit terminal, préalablement à la détection de présence, et
**en ce que** le terminal de télécommunication mobile comprend un pilote du module d'accès, qui est stocké dans ladite mémoire, ledit pilote étant apte à :
- être démarré par ledit terminal
- piloter ledit module d'accès à partir dudit terminal à travers ladite liaison de communication.

7. Dispositif selon la revendication 6, le dispositif comprenant en outre,
- une carte à puce (40b),
- un dispositif de lecture apte à interroger la carte à puce,
ladite mémoire comprenant en outre,
- un pilote du dispositif de lecture apte à piloter le dispositif de lecture à partir dudit terminal à travers une liaison de communication entre ledit terminal et le dispositif de lecture,
le système d'exploitation étant apte à démarrer le pilote du dispositif de lecture.

8. Dispositif selon la revendication 7, le dispositif comprenant des moyens de stockage de données comprenant,
- des données chiffrées,
- au moins une clef chiffrée de déchiffrement,
ladite mémoire (20b) comprenant en outre,
- un pilote de gestion d'accès à des données apte à construire au moins une partition virtuelle à partir desdites données chiffrées stockées dans lesdits moyens de stockage de données, afin de rendre accessible par un utilisateur dudit terminal lesdites données chiffrées, le pilote de gestion d'accès à des données étant apte à envoyer à ladite carte à puce via ledit pilote dudit dispositif de lecture une requête de déchiffrement, par ladite carte à puce, de ladite 'au moins une clef chiffrée de déchiffrement et apte à déclencher, par ladite carte à puce, le déchiffrement d'au moins une partie des données chiffrées au moyen de ladite au moins une clef de déchiffrement déchiffrée,
le système d'exploitation étant apte à déclencher l'exécution du pilote de déchiffrement.

9. Dispositif selon la revendication 7 ou 8, ladite carte à puce étant intégrée dans ledit terminal de télécommunication mobile.

## Patentansprüche

1. Verfahren zum Konfigurieren eines Endgeräts, das einen Schritt zum Initialisieren des Endgeräts aufweist, der automatisch mindestens Folgendes auslöst:
- einen Schritt (110) zum Erkennen des Vorhandenseins eines Speichers (20b) durch ein Eingabe/Ausgabe-Basissystem des Endgeräts,
- einen Schritt (112) zum Zugreifen auf den Speicher durch das Eingabe/Ausgabe-Basissystem,
- einen Schritt (115) zum Starten eines Betriebssystems des Endgeräts, das in dem Speicher gespeichert ist, **dadurch gekennzeichnet, dass** vor dem Schritt zum Erkennen des Vorhandenseins das Verfahren einen Schritt (100) zum Verbinden der Kommunikation eines mobilen Telekommunikationsendgeräts (35b) mit dem Endgerät aufweist,
und dass es darüber hinaus das automatische Auslösen eines Schritts (140) zum Starten eines Treibers eines Moduls (30b) für den Zugang zu einem Telekommunikationsnetz aufweist, wobei der Treiber des Moduls für den Zugang in dem Speicher gespeichert ist und geeignet ist, das Modul für den Zugang ausgehend von dem Endgerät über die Kommunikationsverbindung zwischen dem Endgerät und dem mobilen Telekommunikationsendgerät (35b) zu steuern, wobei das mobile Telekommunikationsendgerät den Speicher und das Modul für den Zugang aufweist.

2. Verfahren zum Konfigurieren nach Anspruch 1, das Folgendes aufweist:
- einen Schritt (120) zum Starten eines Treibers eines Chipkartenlesegeräts, das geeignet ist, eine Chipkarte (40b) abzufragen, wobei der Treiber in dem Speicher gespeichert ist und geeignet ist, das Lesegerät über eine Kommunikationsverbindung zwischen dem Endgerät und dem Lesegerät zu steuern.

3. Verfahren zum Konfigurieren nach Anspruch 2, das Folgendes aufweist:
- einen Schritt (155) zum Einrichten eines gesicherten Kommunikationstunnels zwischen dem Endgerät und einem Server des Telekommunikationsnetzes, wobei während dieses Schritts ein starkes Authentifizierungsverfahren mithilfe einer Chipkarte ausgeführt wird, die über den Treiber des Chipkartenlesegeräts abfragbar ist.

4. Verfahren zum Konfigurieren nach Anspruch 2 oder 3, das Folgendes aufweist:
- einen Schritt zum Erstellen (130) mindestens einer virtuellen Partition ausgehend von verschlüsselten Daten, die in dem Speicher gespeichert sind, um die verschlüsselten Daten für einen Benutzer des Endgeräts zugänglich zu machen.

5. Verfahren zum Konfigurieren nach Anspruch 2 oder 3, das Folgendes aufweist:
- einen Schritt (125) zum Senden einer Anfrage zum Entschlüsseln von mindestens einem verschlüsselten Entschlüsselungsschlüssel an eine Chipkarte, die über den Treiber des Chipkartenlesegeräts abfragbar ist,
- einen Schritt (130) zum Entschlüsseln von mindestens einem Teil der verschlüsselten Daten, die in den Mitteln zum Speichern von Daten gespeichert sind, mithilfe von mindestens einem entschlüsselten Entschlüsselungsschlüssel.

6. Vorrichtung zum Konfigurieren eines Endgeräts, wobei die Vorrichtung mindestens einen Speicher (20b) aufweist,
wobei der Speicher während einer Startphase des Endgeräts zugänglich ist für ein Eingabe/Ausgabe-Basissystem des Endgeräts, wobei der Speicher ein Betriebssystem des Endgeräts aufweist,
wobei der Speicher geeignet ist, während des Startens des Endgeräts mindestens Folgendes zu ermöglichen:
- Erkennen des Vorhandenseins des Speichers durch das Eingabe/Ausgabe-Basissystem des Endgeräts,
- Zugreifen auf den Speicher durch das Eingabe/Ausgabe-Basissystem,
- Starten des im Speicher gespeicherten Betriebssystems, **dadurch gekennzeichnet, dass** die Vorrichtung zum Konfigurieren ein mobiles Telekommunikationsendgerät ist, das ein Modul für den Zugang zu einem Telekommunikationsnetz aufweist,
dass das mobile Telekommunikationsendgerät Mittel zum Einrichten einer Kommunikationsverbindung des mobilen Telekommunikationsendgeräts (35b) mit dem Endgerät vor dem Erkennen des Vorhandenseins aufweist, und
dass das mobile Telekommunikationsendgerät einen Treiber des Moduls für den Zugang aufweist, der in dem Speicher gespeichert ist, wobei der Treiber geeignet ist:
- von dem Endgerät gestartet zu werden,
- das Modul für den Zugang ausgehend von dem Endgerät über die Kommunikationsverbindung zu steuern.

7. Vorrichtung nach Anspruch 6, wobei die Vorrichtung darüber hinaus Folgendes aufweist:
- eine Chipkarte (40b),
- ein Chipkartenlesegerät, das geeignet ist, die Chipkarte abzufragen, wobei der Speicher darüber hinaus Folgendes aufweist:
- einen Treiber des Chipkartenlesegeräts, der geeignet ist, das Lesegerät ausgehend von dem Endgerät über eine Kommunikationsverbindung zwischen dem Endgerät und dem Lesegerät zu steuern,
wobei das Betriebssystem geeignet ist, den Treiber des Lesegeräts zu starten.

8. Vorrichtung nach Anspruch 7, wobei die Vorrichtung Mittel zum Speichern von Daten aufweist, die Folgendes aufweisen:
- verschlüsselte Daten,
- mindestens einen verschlüsselten Entschlüsselungsschlüssel,
wobei der Speicher (20b) darüber hinaus Folgendes aufweist:
- einen Treiber zur Verwaltung des Zugriffs auf Daten, der geeignet ist, mindestens eine virtuelle Partition ausgehend von den verschlüsselten Daten zu erzeugen, die in den Mitteln zum Speichern von Daten gespeichert sind, um die verschlüsselten Daten für einen Benutzer des Endgeräts zugänglich zu machen, wobei der Treiber zur Verwaltung des Zugriffs auf Daten geeignet ist, eine Anfrage zum Entschlüsseln des mindestens einen verschlüsselten Entschlüsselungsschlüssels durch die Chipkarte an die Chipkarte zu senden, und geeignet ist, durch die Chipkarte die Entschlüsselung von mindestens einem Teil der verschlüsselten Daten mithilfe des mindestens einen entschlüsselten Entschlüsselungsschlüssels auszulösen,
wobei das Betriebssystem geeignet ist, die Ausführung des Treibers zum Entschlüsseln auszulösen.

9. Vorrichtung nach Anspruch 7 oder 8, wobei die Chipkarte in das mobile Telekommunikationsendgerät integriert ist.

## Claims

1. Method of configuring a terminal comprising a step of initializing said terminal which automatically triggers at least:
- a step (110) of detecting the presence of a memory (20b) by a basic input/output system of the terminal,
- a step (112) of accessing said memory by the basic input/ouput system, and
- a step (115) of starting up an operating system of said terminal stored in said memory,
**characterized in that** prior to the step of detecting presence, the method comprises a step (100) of linking of communication of a mobile telecommunication terminal (35b) with said terminal,
and **in that** it furthermore comprises the automatic triggering of a step (140) of starting up a driver of a telecommunication network access module (30b), the driver of the access module being stored in said memory and able to drive the access module from said terminal through said communication link between said terminal and the mobile telecommunication terminal (35b), said mobile telecommunication terminal comprising said memory and said access module.

2. Configuration method according to Claim 1, comprising
- a step (120) of starting up a driver of a chip card reading device able to interrogate a chip card (40b), the driver being stored in said memory and being able to drive the reading device through a communication link between said terminal and the reading device.

3. Configuration method according to Claim 2 comprising,
- a step (155) of establishing a secure communication tunnel between said terminal and a server of said telecommunication network, during which step a strong authentication procedure is implemented by means of a chip card interrogatable via said driver of the chip card reading device.

4. Configuration method according to Claim 2 or 3 comprising,
- a step (130) of constructing at least one virtual partition on the basis of enciphered data stored in said memory in order to render said enciphered data accessible by a user of said terminal.

5. Configuration method according to Claim 2 or 3 comprising,
- a step (125) of dispatching to a chip card, interrogatable via the driver of the chip card reading device, a request to decipher at least one enciphered deciphering key,
- a step (130) of deciphering at least part of the enciphered data stored in means for storing data by means of at least one deciphered deciphering key.

6. Device for configuring a terminal, the device comprising at least, a memory (20b),
the memory being accessible by a basic input/ouput system of said terminal during a phase of starting up of said terminal, said memory comprising an operating system of the terminal,
said memory being able to sustain,
during the starting up of the terminal, at least
- the detection by the basic input/ouput system of the terminal of the presence of said memory,
- access by the basic input/ouput system to said memory,
- the starting up of the operating system stored in said memory,
**characterized in that** the configuration device is a mobile telecommunication terminal comprising a module for access to a telecommunication network,
**in that** the mobile telecommunication terminal comprises means for establishing a link for communication of the mobile telecommunication terminal (35b) with said terminal, prior to the detection of presence, and
**in that** the mobile telecommunication terminal comprises a driver of the access module, which is stored in said memory, said driver being able to:
- be started up by said terminal
- pilot said access module on the basis of said terminal through said communication link.

7. Device according to Claim 6, the device furthermore comprising,
- a chip card (40b),
- a reading device able to interrogate the chip card,
said memory furthermore comprising,
- a driver of the reading device able to drive the reading device from said terminal through a communication link between said terminal and the reading device,
the operating system being able to start up the driver of the reading device.

8. Device according to Claim 7, the device comprising means for storing data comprising,
- enciphered data,
- at least one enciphered deciphering key,
said memory (20b) furthermore comprising,
- a data access management driver able to construct at least one virtual partition on the basis of said enciphered data stored in said means for storing data, so as to render said enciphered data accessible by a user of said terminal, the data access management driver being able to dispatch to said chip card via said driver of said reading device a request by said chipcard to decipher at least one enciphered deciphering key and able to trigger, by said chip card the decipherment of at least part of the enciphered data by means of said at least one deciphered deciphering key,
the operating system being able to trigger the execution of the deciphering driver.

9. Device according to Claim 7 or 8, said chip card being integrated into said mobile telecommunication terminal.
